# EUROPÄISCHE PATENTSCHRIFT

(11) **EP 3 649 354 B1**
(45) Veröffentlichungstag und Bekanntmachung des Hinweises auf die Patenterteilung: **25.11.2020**
(21) Anmeldenummer: 18739814.4
(22) Anmeldetag: 04.07.2018
(51) Int. Cl.: F16B 33/00, F16B 19/02, F16B 43/00

(54) **SYSTEM ZUM FIXIEREN EINES SCHWENKBOLZENS AN EINEM FAHRZEUGRAHMEN**
SYSTEM FOR SECURING A PIVOTING BOLT TO A VEHICLE FRAME
SYSTÈME DE FIXATION D'UN AXE DE PIVOTEMENT À UN CHÂSSIS DE VÉHICULE

(30) Priorität: 07.07.2017 DE 102017115248
(43) Veröffentlichungstag der Anmeldung: 13.05.2020
(73) Patentinhaber: SAF-HOLLAND GmbH, 63856 Bessenbach (DE)
(72) Erfinder: BACKULJA, Dusan, 11000 Beograd (RS)
(74) Vertreter: Müller Schupfner & Partner Patent- und Rechtsanwaltspartnerschaft mbB
(86) Internationale Anmeldenummer: PCT/EP2018/068076
(87) Internationale Veröffentlichungsnummer: WO 2019/008024

(56) Entgegenhaltungen:
- US-A- 5 288 191
- US-A1- 2003 019 259
- US-A1- 2016 290 391
- US-B1- 6 550 795

## Beschreibung

Die vorliegende Erfindung betrifft ein System zum Fixieren eines Schwenkbolzens an einem Fahrzeugrahmen, ein Fahrzeugrahmen zum Anbinden eines Schwenkbolzens und ein Verfahren zur Montage eines Schwenkbolzens an einem Fahrzeugrahmen.

Lenkerelemente, insbesondere Längslenker, sind aus dem Stand der Technik hinlänglich bekannt und dienen der Anbindung einer Fahrzeugachse an ein Fahrzeugchassis. Hierzu sind die Lenkerelemente schwenkbar um eine Schenkachse an einem Fahrzeugrahmen gelagert. Typischerweise umfasst dieser Fahrzeugrahmen zwei im Wesentlichen parallel zu einander verlaufende Seitenwände, zwischen denen im montierten Zustand der Schwenkbolzen verläuft, während das Lenkerelement zwischen den Seitenwänden schwenkbar an dem Schwenkbolzen angelenkt ist. Üblicherweise ist hierbei ein Klemmmechanismus vorgesehen, der den Schwenkbolzen gegenüber dem Fahrzeugrahmen derart fixiert, dass Drehbewegungen oder Verschiebungen des Schwenkbolzens vermieden werden können.

Allerdings kann es dazu kommen, dass die Seitenwände nicht parallel zueinander verlaufen und sich der üblicherweise verwendete Klemmmechanismus deswegen nicht zwischen die Seitenwände einsetzen lässt. Ohne den Klemmmechanismus kann es aber bei Schwenkbewegungen des Lenkerelements in solchen Fällen zu einer vom Schwenkbolzen ausgehenden Geräuschbildung kommen.

Die US 2016/0290391 A1 befasst sich generell mit der Anordnung von Strukturen, insbesondere mit der Anordnung von drehbaren Strukturen.

Die US 2003/0019259 A1 präsentiert eine Vorrichtung und ein Verfahren zur Sicherung von Komponenten eines Fahrrades.

Die US 6,550,795 B1 zeigt ein Fahrzeugaufhängungssystem und eine Ausrichtungsvorrichtung für ein solches Fahrzeug.

Die US 5,288,191 A betrifft eine Vorrichtung für das klemmende Fügen von strukturellen Komponenten mittels einer Verbindungsschraube und einer Distanzplatte, die in einem Zwischenbereich angeordnet ist.

Die DE 10 2012 201 745 A1 betrifft eine Luftfederbefestigung, insbesondere für Nutzfahrzeuge, umfassend ein Positionierelement, eine Führungslenkereinheit und eine Luftfedereinheit.

Die DE 41 15 110 A1 betrifft ein Verfahren und eine Vorrichtung zum werkseitigen Voreinstellen von Fahrzeugrädern und zum späteren Neueinstellen der Räder nach Gebrauch des Fahrzeugs sowie zur Kontrolle einer solchen Neueinstellung.

Es ist daher eine Aufgabe der vorliegenden Erfindung ein möglichst universell einsetzbares System bereitzustellen, mit dem sich der Schwenkbolzen gegenüber dem Fahrzeugrahmen fixieren lässt, insbesondere in Hinblick auf Verschiebungen und Verdrehungen gegenüber dem Fahrzeugrahmen.

Diese Aufgabe wird gelöst durch ein System zum Fixieren eines Schwenkbolzens an einem Fahrzeugrahmen gemäß Anspruch 1, durch ein Fahrzeugrahmen zum Anbinden eines Schwenkbolzens gemäß Anspruch 13 und ein Verfahren zur Montage eines Schwenkbolzens an einem Fahrzeugrahmen gemäß Anspruch 15. Weitere Vorteile und Merkmale der Erfindung ergeben sich aus den Unteransprüchen sowie der Beschreibung und den beigefügten Figuren.

Erfindungsgemäß ist ein System zum Fixieren eines Schwenkbolzens an einem Fahrzeugrahmen, an der in einem montierten Zustand ein Lenkerelement, insbesondere eines Nutzfahrzeugs, schwenkbar gelagert ist, vorgesehen, umfassend ein Hülsenelement zur Aufnahme des Schwenkbolzens, wobei ein Kragenbereich am Hülsenelement vorgesehen oder ausgebildet ist, wobei der Kragenbereich derart ausgestaltet ist, dass der Kragenbereich zur Vermeidung eines Verdrehens des Hülsenelements in einem montierten Zustand formschlüssig mit einem fahrzeugrahmenseitigen Eingriffsbereich, insbesondere einem Vorsprung oder einem Rücksprung, zusammenwirkt. Im Gegensatz zum Stand der Technik kann mittels des erfindungsgemäßen Systems in vorteilhafter Weise auf ein Klemmmechanismus verzichtet werden. D. h. ein solches System lässt sich auch an solchen Fahrzeugrahmen verwenden, bei denen sich ein Klemmmechanismus zum Fixieren des Schwenkbolzens nicht realisieren lässt. Vorzugsweise umfasst der Fahrzeugrahmen zwei Seitenwände, zwischen denen der Schwenkbolzen quer, d. h. senkrecht zur Fahrtrichtung, zur Lagerung des Lenkerelements, insbesondere eines Längslenkers, verläuft. Mittels des Hülsenelements, insbesondere des hülsenelementseitigen Kragenbereichs, ist es mit Vorteil möglich, den Schwenkbolzen gegenüber Drehbewegung zu fixieren. Hierzu ist der Schwenkbolzen vorzugsweise im montierten Zustand mit dem Hülsenelement drehfest, beispielsweise form- und/oder kraftschlüssig, verbunden. Dabei wirkt der hülsenelementseitige Kragenbereich vorzugsweise entlang einer durch eine Schwenkrichtung vorgegebene Richtung mit dem fahrzeugrahmenseitigen Vorsprung zusammen, um im Betrieb das Hülsenelement und damit den Schwenkbolzen an Drehbewegungen zu hindern. Unter Schwenkrichtung wird vorzugsweise diejenige Drehrichtung verstanden, entlang der im Betrieb auch eine Schwenkbewegung des Lenkerelements erfolgt. Hierzu ist es mit Vorteil vorgesehen, dass der hülsenelementseitige Kragenbereich komplementär zu dem fahrzeugrahmenseitigen Eingriffsbereich, insbesondere Vor- oder Rücksprung, ausgestaltet ist. Vorzugsweise sind der fahrzeugrahmenseitige Eingriffsbereich, insbesondere Vor- oder Rücksprung, und der hülsenelementseitige Kragenbereich derart ausgestaltet, dass sie in Schwenkrichtung und entgegen der Schwenkrichtung, also drehsinnunabhängig, formschlüssig miteinander zusammenwirken. Um eine ausreichend große Formschlussfläche, entlang der der hülsenelementseitige Kragenbereich und der fahrzeugrahmenseitige Eingriffsbereich miteinander zusammenwirken, bereitzustellen, steht der fahrzeugrahmenseitige Eingriffsbereich mit einer Vorsprungshöhe oder Rücksprungstiefe von einer Oberseite des Fahrzeugrahmens, insbesondere der Seitenwand, ab bzw. ragt hinein. Insbesondere nimmt ein Verhältnis zwischen einer im montierten Zustand parallel zur Längsrichtung des Schwenkbolzens bemessene Dicke des hülsenförmigen Kragenelements zur Vorsprungshöhe oder Rücksprungstiefe einen Wert zwischen 0,2 und 1,2, bevorzugt zwischen 0,5 und 0,95 und besonders bevorzugt zwischen 0,75 und 0,93 an. Dadurch lässt sich der hülsenelementseitige Kragenbereich, insbesondere für ein Verhältnis zwischen 0,75 und 0,93, in Längsrichtung des Schwenkbolzen gesehen vorzugsweise gegenüber dem Vorsprung versetzt und somit geschützt anordnen und gleichzeitig eine möglichst große Formschlussfläche bereitstellen. Weiterhin ist es bevorzugt vorgesehen, dass der Schwenkbolzen zylinder- bzw. stabförmig ausgestaltet ist, insbesondere in einem Gewindebereich des Schwenkbolzens. Vorzugsweise umfasst der Schwenkbolzen einen Schwenkbolzenkopf, mit dem der Schwenkbolzen im montierten Zustand an einer Seitenwand des Fahrzeugrahmens anliegt, und ein Gewinde an einem dem Schwenkbolzenkopf gegenüberliegenden Ende des Schenkbolzens. Im montierten Zustand durchgreift der Schwenkbolzen den Fahrzeugrahmen, d. h. beide Seitenwände des Fahrzeugrahmens. Insbesondere sind die Seitenwände an einen Querträger des Fahrzeugrahmens montiert, insbesondere stoffschlüssig angebunden, beispielsweise angeschweißt. Ferner ist es vorstellbar, dass das Hülsenelement und der Kragenbereich integral, d. h. einstückig, ausgebildet sind. Weiterhin ist es bevorzugt vorgesehen, dass der fahrzeugelementseitige Eingriffsbereich, insbesondere Vor- oder Rücksprung, im Bereich einer Aussparung, durch die im montierten Zustand der Schwenkbolzen hindurchgreift, im bzw. am Fahrzeugrahmen angeordnet ist. Insbesondere nimmt ein Verhältnis zwischen einem geringsten Abstand des fahrzeugelementseitigen Vorsprungs zur Aussparung und dem Durchmesser der Aussparung einen Wert zwischen 0,05 und 0,6, bevorzugt zwischen 0,1 und 0,5 und besonders bevorzugt zwischen 0,2 und 0,4 an. Es ist weiterhin vorstellbar, dass der fahrzeugrahmenseitige Eingriffsbereich, insbesondere Vor- oder Rücksprung, integraler Bestandteil einer der Seitenwände ist.

Erfindungsgemäß ist es vorgesehen, dass das Hülsenelement zur Aufnahme des Schwenkbolzens ein Langloch, insbesondere ein Langloch mit einer ovalen Form, aufweist. Das Langloch vereinfacht mit Vorteil eine Montage, da es vor dem Fixieren des Schwenkbolzens eine Ausrichtung des Schwenkbolzens erlaubt. Dadurch lässt sich der Schwenkbolzen insbesondere so ausrichten, dass er senkrecht zu einer Fahrtrichtung verläuft. Vorzugsweise ist das Langloch derart dimensioniert, dass sich der Schwenkbolzen lediglich entlang einer Richtung verschieben lässt. Durch die Begrenzung der Freiheitsgrade für die Bewegung des Schwenkbolzens wird die Montage weiter vereinfacht. Hierzu entspricht eine Schlitzbreite des Langlochs im Wesentlichen einem Außendurchmesser des im Langloch gelagerten Teils des Schwenkbolzens.

Zweckmäßigerweise ist es vorgesehen, dass das Langloch sich im montierten Zustand entlang einer parallel zu einer Fahrrichtung oder senkrecht zu einer Fahrtrichtung verlaufenden Richtung erstreckt. Dabei wird eine Ausrichtung des Hülsenelements und damit des Langlochs insbesondere durch den Formschluss mit dem fahrzeugrahmenseitigen Eingriffsbereich, insbesondere Vor- oder Rücksprung, festgelegt. Mittels eines parallel zur Fahrtrichtung verlaufenden Langlochs kann mit Vorteil ein Versatz in Fahrrichtung zum Ausrichten des Schwenkbolzens erfolgen und mit einem senkrecht zur Fahrtrichtung verlaufenden Versatz eine Höhenanpassung. Dabei ist es vorstellbar, dass die Ausrichtung des Langlochs im Hülsenelement durch ein Langloch in der Seitenwand festgelegt ist, die im montierten Zustand dem Hülsenelement gegenüberliegt. Beispielsweise sind die Langlöcher in der Seitenwand und im Hülsenelement parallel zueinander oder senkrecht zueinander ausgerichtet.

Zweckmäßig ist es vorgesehen, dass das Hülsenelement eine zylinderförmige Außenmantelfläche zum passgenauen Einlassen des Hülsenelements in eine Aussparung des Fahrzeugrahmens aufweist. Dadurch lässt sich das Hülsenelement entlang einer durch eine Längsrichtung des Schwenkbolzens vorgegebenen Richtung in die fahrzeugrahmenseitige Aussparung einschieben. Insbesondere lässt sich das Hülsenelement bei der Montage solange verdrehen bis der Kragenbereich im Sinne eines Schlüssel-Schloss-Prinzips in die Aussparung eingeschoben werden kann und im eingeschoben Zustand formschlüssig mit dem oder den Eingriffsbereichen, insbesondere Vor- oder Rücksprüngen, zusammenwirkt. Die Außenmantelfläche erstreckt sich dabei im montierten Zustand vorzugsweise in Längsrichtung des Schwenkbolzen gesehen entlang der gesamten Aussparung in der Seitenwand um eine Ablagerung von Fremdstoffen zu vermeiden und eine möglichst große Auflagefläche für den Schwenkbolzen bereitzustellen. Unter passgenau ist insbesondere zu verstehen, dass ein Innendurchmesser der Aussparungen im Wesentlichen dem Außendurchmesser des Hülsenelements entspricht, so dass sich das Hülsenelement ohne Spiel bzw. ohne die Ausbildung eines Spalts in der Aussparung des Fahrzeugrahmens anordnen lässt. Vorzugsweise ist das Hülsenelement derart dimensioniert, dass sich das Hülsenelement in der Aussparung verpressen lässt. Es kann somit eine Presspassung vorliegen.

Vorzugsweise ist es vorgesehen, dass der Kragenbereich zur Ausbildung von Formschlussflächen, die im montierten Zustand in Schwenkrichtung formschlüssig mit dem fahrzeugrahmenseitigen Vorsprung zusammenwirken, einen kreissehnenförmigen Abschnitt aufweist. Solche Formschlussflächen lassen sich vergleichsweise einfach herstellen, da lediglich ein Teil des andernfalls kreisrunden Umfangs des Kragenbereichs abgetrennt werden muss. Dabei liegt im montierten Zustand der kreissehnenförmige Abschnitt am Vorsprung an. Hierbei ist es vorstellbar, dass der Kragenbereich, insbesondere im kreissehnigen Abschnitt, gehärtet ist, um den in Betrieb an den Formschlussflächen auftretenden Belastungen gerecht zu werden. Besonders bevorzugt ist es, wenn der kreissehnenförmige Abschnitt komplementär zu zumindest Teilen des fahrzugseitigen Eingriffsabschnitts ausgebildet ist.

Zweckmäßig ist es vorgesehen, dass ein Verhältnis zwischen dem kreissehnenförmigen Abschnitt zu einem entlang der Schwenkrichtung bemessenen Gesamtumfang des Kragenbereichs einen Wert zwischen 0,2 bis 0,8, bevorzugt 0,35 bis 0,65 und besonders bevorzugt 0,38 bis 0,52 annimmt. Es hat sich mit Vorteil herausgestellt, dass sich mit einer Dimensionierung zwischen 0,35 und 0,65 eine Länge für den kreissehnenförmigen Abschnitt bereitstellen lässt, mit der durch das formschlüssige Zusammenwirken mit dem Vorsprung ein drehsinnunabhängiges Verdrehen des Hülsenelements im montierten Zustand unterbinden lässt. Für eine Dimensionierung zwischen 0,38 bis 0,52 wird zudem mit Vorteil ein ausreichend stabiler Kragenbereich bereitgestellt.

Vorzugsweise ist es vorgesehen, dass der hülsenelementseitige Kragenbereich in Längsrichtung des Schwenkbolzens abstehende Vorsprünge aufweist, die im montierten Zustand in Schwenkrichtung mit einem Teil des Schwenkbolzens, vorzugsweise einem Schwenkbolzenkopf, insbesondere einem Schraubkopf, formschlüssig zusammenwirken. Mittels der in Längsrichtung (des Schwenkbolzens) abstehenden Vorsprünge ist es mit Vorteil möglich, eine drehfeste Verbindung zwischen dem Schwenkbolzen und dem Hülsenelement zu erzielen. Besonders bevorzugt wirken die in Längsrichtung abstehenden Vorsprünge mit einem Schraubkopf in Schwenkrichtung formschlüssig zusammen, d. h. der Schwenkbolzen wird auf der Seite des Hülsenelements in den Fahrzeugrahmen eingeführt und so platziert, dass der Schwenkbolzenkopf bzw. der Schraubkopf formschlüssig mit den Vorsprüngen zusammenwirkt. Anschließend wird der Schwenkbolzen mittels einer Mutter fixiert, die auf den Schwenkbolzen an der dem Hülsenelement gegenüberliegenden Seitenwand des Fahrzeugrahmens aufgeschraubt wird.

Bevorzugt ist es vorgesehen, dass das System ein Adapterelement aufweist, das derart gestaltet ist, dass das Adapterelement im montierten Zustand den fahrzeugrahmenseitigen Eingriffsbereich, insbesondere Vor- oder Rücksprung, bereitstellt. Dadurch lässt sich der fahrzeugrahmenseitige Eingriffsbereich, insbesondere Vor- oder Rücksprung, auf möglichst einfache Weise an einem Fahrzeugrahmen realisieren. D. h. das System lässt sich mit Vorteil für solche Fahrzeugrahmen nutzen, die lediglich eine Aussparung, beispielsweise ein Loch, in ihrer Seitenwand aufweisen. Dabei ist es vorstellbar, dass zur Montage des Adapterelements, die Seitenwand weiter aufgebohrt und anschließend das Adapterelement in die Seitenwand eingeschoben wird. Ferner ist das Adapterelement vorzugsweise zum formschlüssigen, kraftschlüssigen und/oder stoffschlüssigen Anbinden an den Fahrzeugrahmen ausgestaltet. Beispielsweise umfasst das Adapterelement Strukturierungen, wie Rillen oder eine Oberflächenaufrauhung, die eine Ausbildung eines Form- oder Kraftschlusses zwischen dem Adapterelement und dem Fahrzeugrahmen unterstützen. Vorzugsweise wird das in der Seitenwand platzierte Adapterelement mit der Seitenwand verschweißt. Hierzu umfasst das Adapterelement beispielsweise ein adapterelementseitiges Kragenbereich, der eine möglichst große Fläche für eine stoffschlüssige Verbindung bereitstellt.

Vorteilhafterweise ist es vorgesehen, dass das Adapterelement im montierten Zustand eine fahrzeugrahmenseitige Aussparung des Fahrzeugrahmens bereitstellt, wobei die Aussparung einen Durchmesser aufweist, wobei ein Verhältnis einer Länge des Langlochs im Hülsenelement zum Durchmesser der Aussparung einen Wert zwischen 0,3 und 0,9, bevorzugt zwischen 0,5 und 0,9 und besonders bevorzugt zwischen 0,75 und 0,88 annimmt. Bei einem Verhältnis zwischen 0,75 und 0,88 wird mit Vorteil ein besonders langes Langloch bereitgestellt, das bei der Montage des Schwenkbolzens eine entsprechende Bewegungsfreiheit erlaubt. Für die Verhältnisse zwischen 0,5 und 0,9 stellt die Dimensionierung sicher, dass der Kragenbereich bzw. das Hülsenelement den zu erwartenden Belastungen standhält.

Zweckmäßigerweise ist es vorgesehen, dass das Adapterelement als fahrzeugrahmenseitiger Vorsprung ein Kreissegment aufweist, wobei vorzugsweise mehrere Kreissegmente vorgesehen sind, deren Kreissehnen parallel zueinander ausgerichtet und einander zugewandt sind. Dadurch lässt sich zwischen den fahrzeugrahmenseitigen Vorsprüngen ein nutförmiger Kanal bereitstellen, in dem der hülsenelementseitige Kragenbereich im montierten Zustand angeordnet ist. Vorzugsweise ist es vorgesehen, dass das Adapterelement zeitlich vor dem stoffschlüssigen Verbinden mit der Seitenwand bzw. dem Fahrzeugrahmen so ausgerichtet wird, dass die Kreissehnen im Wesentlichen senkrecht zur Fahrtrichtung verlaufen. Insbesondere sind die Kreissehnen der Kreissegmente des Adapterelements komplementär zu den kreissehnenförmigen Abschnitten des Hülsenelements ausgestaltet.

Vorzugsweise ist es vorgesehen, dass das Hülsenelementelement verklemmbar mit dem Schwenkbolzen ist, vorzugsweise mittels eines Gegenstückelements, wie z. B. einer Mutter, und/oder das Hülsenelement ausgelegt ist, eine zwischen Seitenwänden des Fahrzeugrahmens angeordnete Buchse zu verklemmen. Dadurch lässt sich das Hülsenelement mit Vorteil drehfest mit dem Schwenkbolzen verbinden. Vorzugsweise wird das Gegenstückelemente auf ein schwenkbolzenseitiges Gewinde aufgezogen und solange festgezogen bis das Hülsenelement mit dem Fahrzeugrahmen, insbesondere der Seitenwand, verklemmt ist. Vorzugsweise ist ein Unterlegscheibenelement vorgesehen, das im montierten Zustand zwischen dem Gegenstückelement und dem Hülsenelement anordenbar ist. Dabei ist das Unterlegscheibenelement vorzugsweise derart ausgestaltet, dass in Längsrichtung des Schwenkbolzens gesehen eine gleichmäßige Kraft auf eine Kragenfläche des Kragenbereichs wirkt. Weiterhin ist es vorstellbar, dass das Unterlegscheibenelement derart dimensioniert ist, dass das Unterlegscheibenelement den Kragenbereich und die fahrzeugrahmenseitigen Vorsprünge bedeckt und dadurch in vorteilhafter Weise eine Ablagerung von Fremdstoffen verhindert sowie einen Schutz für die Kragenbereiche des Adapterelements und des Hülsenelements bereitstellt. Sofern das Hülsenelement eine zwischen den Seitenwänden des Fahrzeugrahmens angeordnete Buchse verklemmt, ist es vorgesehen, dass das Hülsenelement im montierten Zustand durch eine erste der Seitenwände durchgreift oder durchragt und gegenüber der Seitenwand übersteht. Dadurch lässt sich die Buchse mit Vorteil zwischen der anderen der Seitenwände und dem Hülsenelement derart verklemmen, dass bei einer Schwenkbewegung des Lenkerelements die Buchse und das Hülsenelement nicht mitverschwenkt bzw. verdreht werden können. Insbesondere ist es vorgesehen, dass das Lenkerelement an der Buchse angebunden ist.

Zweckmäßig ist es vorgesehen, dass das System einen Einsatz mit einem einsatzseitigen Langloch aufweist. Dadurch lässt sich mit Vorteil in der Seitenwand, die im montierten Zustand der Seitenwand mit dem Hülsenelement gegenüberliegt, ebenfalls ein Langloch bereitstellen, wodurch sich in vorteilhafter Weise die Montage weiter vereinfachen lässt. Insbesondere ist es hierbei vorgesehen, dass der Einsatz in eine Aussparung, vorzugsweise eine kreisrunde Aussparung, eingelassen wird und anschließend mit der Seitenwand verschweißt wird. Dabei ist es vorstellbar, dass die Aussparung in der Seitenwand zunächst geweitet wird, um ein Einschieben des Einsatzes zu ermöglichen.

Zweckmäßigerweise ist es vorgesehen, dass das Adapterelement und das Hülsenelement derart gestaltet sind, dass sie in Schwenkrichtung gesehen bündig miteinander abschließen. Besonderes bevorzugt ist es vorgesehen, dass der Kragenbereich und der Vorsprung derart ausgestaltet sind, dass sie bündig an ihrem Umfang, insbesondere nach außen, abschließen. Dadurch lässt sich ein Ablagern von Fremdstoffen und die Bildung von Vorsprüngen, die ein Verletzungsrisiko darstellen, vermeiden. Der hülsenförmige Kragenbereich und der fahrzeugrahmenseitige Vorsprung, vorzugsweise am Adapterelement, sind vorteilhafterweise derart ausgestaltet, das sie einen geschlossenen Umfang bereitstellen.

Weiterhin vorgesehen ist ein Fahrzeugrahmen zum Anbinden eines Schwenkbolzens, um den in einem montierten Zustand ein Lenkerelement schwenkbar ist, wobei der Fahrzeugrahmen gegenüberliegende Seitenwände aufweist, wobei die Seitenwände jeweils eine Aussparung aufweisen, die zueinander fluchted angeordnet sind, wobei der Fahrzeugrahmen zumindest einen von einer der Seitenwände abstehenden fahrzeugrahmenseitigen Eingriffsbereich, insbesondere Vor- oder Rücksprung, zur Ausbildung eines Widerlagers für ein Hülsenelement mit einem Kragenbereich aufweist. Alle für das erfindungsgemäße System beschriebenen Merkmale und deren Vorteile lassen sich sinngemäß ebenfalls auf das erfindungsgemäße Fahrzeugrahmen übertragen und andersherum.

Weiterhin ist es vorgesehen, dass die Aussparung in zumindest einer der Seitenwände ein Langloch ist. Mittels des Langlochs lässt sich die Montage des Schwenkbolzens weiter vereinfachen.

Weiterhin vorgesehen ist ein Verfahren zur Montage eines Schwenkbolzens an einem Fahrzeugrahmen:
- Bereitstellen des Fahrzeugrahmens, des Schwenkbolzens und eines Hülsenelements, wobei ein Kragenbereich am Hülsenelement derart ausgestaltet ist, dass der Kragenbereich zur Vermeidung eines Verdrehens des Hülsenelements bzw. Hülsenköpers in einem montierten Zustand formschlüssig mit einem fahrzeugrahmenseitigen Eingriffsbereich, insbesondere Vor- oder Rücksprung, zusammenwirkt
- Einfügen des Hülsenelements in eine Aussparung des Fahrzeugrahmens,
- Einfügen des Schwenkbolzens in das Hülsenelement und
- Verbinden des Hülsenelements mit dem Schwenkbolzen.
Alle für das erfindungsgemäße System beschriebenen Merkmale und deren Vorteile lassen sich sinngemäß ebenfalls auf das erfindungsgemäße Verfahren übertragen und andersherum. Insbesondere wird das Hülsenelement mit dem Schwenkbolzen derart verbunden, dass der Schwenkbolzen und das Hülsenelement zueinander drehfest sind.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden. Es zeigen
- **Fig.1:**: ein System zum Fixieren eines Schwenkbolzen gemäß einer ersten bevorzugten Ausführungsform der vorliegenden Erfindung, und
- **Fig. 2:**: ein System zum Fixieren eines Schwenkbolzens gemäß einer zweiten bevorzugten Ausführungsform der vorliegenden Erfindung.

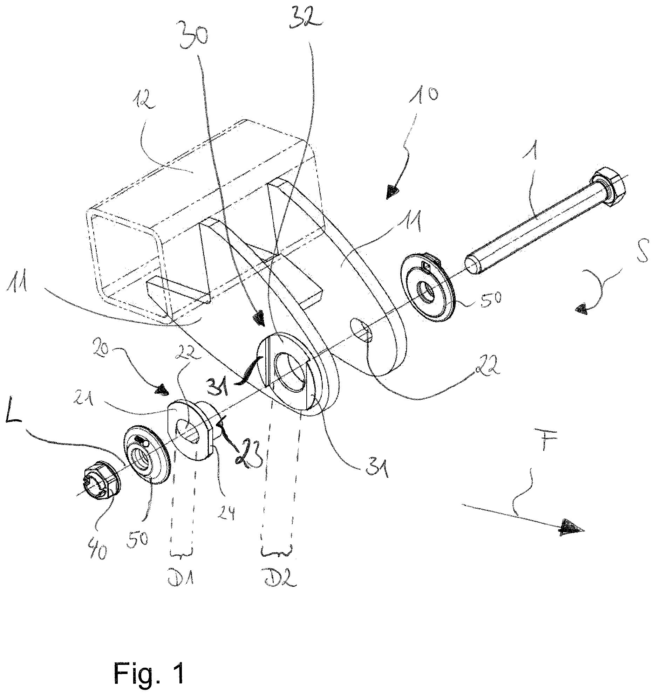

In **Figur 1** ist ein System zum Fixieren eines Schwenkbolzens 1 gemäß einer bevorzugten Ausführungsform der vorliegenden Erfindung dargestellt. Insbesondere handelt es sich um einen Schwenkbolzen 1, über den ein Lenkerelement eines Nutzfahrzeugs schwenkbar am Fahrzeugchassis angebunden ist. Hierbei ist der Schwenkbolzen 1 bevorzugt an einem Fahrzeugrahmen 10 schwenkbar angebunden, wobei der Fahrzeugrahmen 10 zwei gegenüberliegende Seitenwände 11 umfasst. Zwischen den Seitenwänden 11 ist im montierten Zustand das Lenkerelement (nicht dargestellt) gelagert. Hierzu wird der Schwenkbolzen 1 in zueinander fluchtenden Aussparungen in den Seitenwänden 11 angeordnet, wodurch die beiden Seitenwände 11 über den quer zur Fahrtrichtung F verlaufenden Schwenkbolzen 1 miteinander verbunden werden. Dabei ist es weiterhin vorstellbar, dass die beiden Seitenwände 11 an einem gemeinsamen Querträger 12 angebunden sind. Abhängig von der Ausgestaltung des Fahrzeugchassis kann es erforderlich sein, dass die Seitenwände 11 an den Querträger 12 angeschweißt werden und dass in Folge dieses Schweißvorgangs die Seitenwände 11 nicht parallel zueinander verlaufen. Infolgedessen können Klemmmechanismen, die andernfalls zum Fixieren des Schwenkbolzen 1 verwendet werden, nicht eingesetzt werden. Um dennoch den Schwenkbolzen 1 im montierten Zustand ausreichend zu fixieren, um so ungewünschte Geräusche beim Verschwenken des Lenkerelements in Schwenkrichtung zu S vermeiden, umfasst das System zum Fixieren des Schwenkbolzens 1 einen Hülsenelement 20, das an seiner Stirnseite ein Kragenbereich 21 aufweist. Insbesondere steht der Kragenbereich 21 senkrecht von einer Außenmantelfläche 23 des Hülsenelements 20 ab. Die Außenmantelfläche 23 ist mit Vorteil derart dimensioniert, dass sich das Hülsenelement 20 im Wesentlichen passgenau in die Aussparung im Fahrzeugrahmen 10, insbesondere in eine der Seitenwände 11 einschieben lässt bis der Kragenbereich 21 am Fahrzeugrahmen 10 anschlägt. Vorzugsweise wird die Aussparung im Fahrzeugrahmen 10 durch ein Adapterelement 30 bereitgestellt. Ein solches Adapterelement 30 umfasst beispielsweise einen hülsenförmigen Grundkörper, der die Aussparung des Fahrzeugrahmens 10 bereitstellt. Vorzugsweise ist das Adapterelement 30 mit der Seitenwand 11 stoffschlüssig verbunden, besonders bevorzugt verschweißt. Weiterhin ist ein adapterelementseitiger Kragenbereich 32 vorgesehen, der im montierten Zustand an einer der Seitenwände 11 anliegt, insbesondere auf einer dem Lenkerelement abgewandten Seite der Seitenwand 11. Vorzugsweise ist der adapterelementseitige Kragenbereich 32 derart ausgestaltet, dass er von der Seitenwand abstehende fahrzeugrahmenseitige Vorsprünge 31 aufweist, die insbesondere im montierten Zustand entlang einer durch die Längsrichtung des Schwenkbolzens 1 vorgegebene Richtung von der Seitenwand 11 abstehen. In dem dargestellten Ausführungsbeispiel sind die fahrzeugrahmenseitigen Vorsprünge 11 als Kreissegmente ausgeformt, deren Kreissehnen parallel zueinander ausgerichtet und einander zugewandt sind. Komplementär zu der Ausgestaltungen der fahrzeugrahmenseitigen Vorsprünge 31 umfasst der hülsenelementseitige Kragenbereich 21 kreissehnenförmige Abschnitte 24. D. h. entlang eines Umfangs des hülsenelementseitigen Kragenbereichs 21 sind zwei parallel zueinander verlaufende kreissehnenförmige Abschnitte 24 vorgesehen. Dadurch ist es möglich, dass im montierten Zustand, dass der hülsenelementseitige Kragenbereich 21 entlang der Schwenkrichtung S formschlüssig mit den fahrzeugrahmenseitigen Vorsprüngen 31 zusammenwirkt. Dadurch lässt sich verhindern, dass sich das Hülsenelement 20 im montierten Zustand entlang der Schwenkrichtung S verdrehen lässt. Sobald der Schwenkbolzen 1 drehfest mit dem Hülsenelement 20 verbunden ist, kann dadurch mit Vorteil der Schwenkbolzen 1 drehfest zum Fahrzeugrahmen 10 fixiert werden.

Um eine Montage des Schwenkbolzens 1 zu vereinfachen, ist vorzugsweise ein Langloch 22 vorgesehen, dass in das Hülsenelement 20 und/oder in eine im montierten Zustand dem Hülsenelement 20 gegenüberliegende Seitenwand 11 integriert ist. Dadurch lässt sich der Schwenkbolzen 1 vergleichsweise einfach und schnell in die vorgesehene Aussparungen im Hülsenelement 20 und/oder in der Seitenwand 11, die im montierten Zustand dem Hülsenelement 20 gegenüberliegt, einbringen. Vorzugsweise ist es vorgesehen, dass das Adapterelement 30 im montierten Zustand die Aussparung des Fahrzeugrahmens 10 bereitstellt, wobei die Aussparung einen Durchmesser D2 aufweist, wobei ein Verhältnis einer Länge D1 des Langlochs 22 im Hülsenelement 20 zum Durchmesser D2 der Aussparung einen Wert zwischen 0,3 und 0,9, bevorzugt zwischen 0,5 und 0,9 und besonders bevorzugt zwischen 0,75 und 0,88 annimmt. Nach einem Ausrichten des Schwenkbolzens 1 in dem oder den Langlöchern 22 wird vorzugsweise das Hülsenelement 20 an dem Fahrzeugrahmen 10 verklemmt, vorzugsweise mittels eines Gegenstückelements 40. Beispielsweise ist das Gegenstückelement 40 eine Mutter, die auf ein Ende des Schwenkbolzens 1 schraubbar ist und durch ihren Versatz entlang einer Längsrichtung L des Schwenkbolzens 1 das Hülsenelement 20 zwischen dem Gegenstückelement 40 und dem Fahrzeugrahmen 10, insbesondere der Seitenwand 11, verklemmt. Um eine möglichst gleichmäßige Klemmkraft, die auf das Hülsenelement 20 wirkt, bereitzustellen, ist vorzugsweise ein Unterlegescheibenelement 50 vorgesehen, das im montierten Zustand zwischen dem Gegenstückelement 40 und dem Hülsenelement 20 angeordnet ist. Vorzugsweise ist ein Außendurchmesser der Unterlegscheibe 50 größer als die Erstreckung des Adapterelements 30 in einer senkrecht zur Längsrichtung L verlaufenden Richtung, so dass im montierten Zustand die Unterlegscheibe 50 das Adapterelement 30und den Kragenbereich 21 bedeckt.

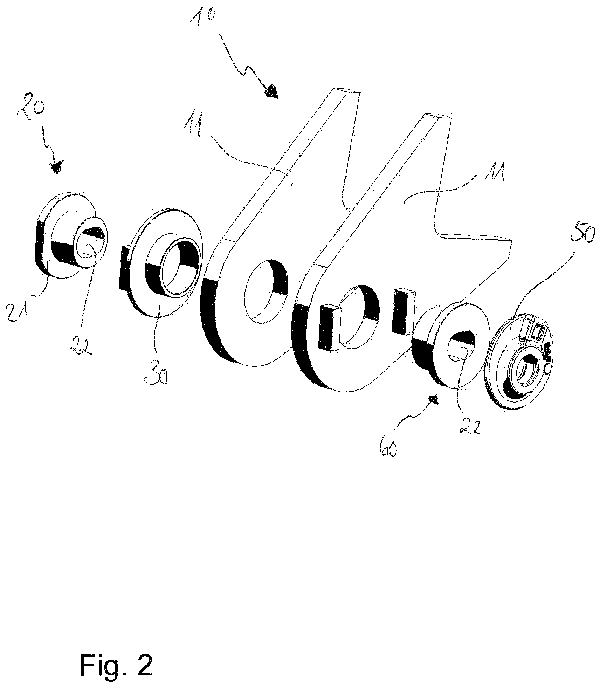

In der **Figur 2** ist ein System zum Fixieren eines Schwenkbolzen 1 gemäß einer zweiten bevorzugten Ausführungsform der vorliegenden Erfindung dargestellt. Im Wesentlichen entspricht dabei die Ausführungsform der Figur 2 derjenigen aus Figur 1 und unterscheidet sich nur dahingehend, dass in der Ausführungsform in Figur 2 das System zusätzlich ein Einsatz 60 umfasst. Dieser Einsatz 60 ist derart ausgestaltet, dass er sich in eine kreisrunde Aussparungen in der Seitenwand 11, die im montierten Zustand dem Hülsenelement 20 gegenüberliegt, einschieben lässt, vorzugsweise passgenau einschieben lässt. Hierbei ist es vorgesehen, dass der Einsatz 60 ein einsatzseitiges Langloch 22 umfasst, so dass der Einsatz 60 das Langloch 22, das in der Figur 1 in der Seitenwand 11 des Fahrzeugrahmens 10 eingelassen ist, bereitstellt.

### Bezugszeichen:

- 1: Schwenkbolzen
- 10: Fahrzeugrahmen
- 11: Seitenwand
- 12: Querträger
- 20: Hülsenelement
- 21: Kragenbereich
- 22: Langloch
- 23: Außenmantelfläche
- 24: kreissehnenförmiger Abschnitt
- 30: Adapterelement
- 31: fahrzeugrahmenseitiger Vorsprung
- 32: adapterelementseitiges Kragenbereich
- 40: Gegenstückelement
- 50: Unterlegscheibenelement
- 60: Einsatz
- D1: Länge des Langlochs
- D2: Durchmesser der Aussparung
- F: Fahrtrichtung
- L: Längsrichtung des Schwenkbolzens
- S: Schwenkrichtung

## Patentansprüche

1. System zum Fixieren eines Schwenkbolzens (1) an einem Nutzfahrzeugrahmen (10), an dem in einem montierten Zustand ein Nutzfahrzeuglenkerelement schwenkbar gelagert ist, umfassend ein Hülsenelement (20) zur Aufnahme des Schwenkbolzens (1),
wobei ein Kragenbereich (21) am Hülsenelement (20) vorgesehen ist,
wobei der Kragenbereich (21) derart ausgestaltet ist, dass der Kragenbereich (21) zur Vermeidung eines Verdrehens des Hülsenelements (20) in einem montierten Zustand formschlüssig mit einem fahrzeugrahmenseitigen Eingriffsbereich, insbesondere einem Vorsprung (31), zusammenwirkt, **dadurch gekennzeichnet, dass** das Hülsenelement (20) zur Aufnahme des Schwenkbolzens (1) ein Langloch (22), insbesondere ein Langloch (22) mit einer ovalen Form, aufweist.

2. System gemäß Anspruch 1, wobei das Hülsenelement (20) eine zylinderförmige Außenmantelfläche (23) zum passgenauen Einlassen des Hülsenelements (20) in eine Aussparung des Nutzfahrzeugrahmens (10) aufweist.

3. System gemäß einem der vorhergehenden Ansprüche, wobei der Kragenbereich (21) zur Ausbildung von Formschlussflächen, die im montierten Zustand in Schwenkrichtung (S) formschlüssig mit dem fahrzeugrahmenseitigen Vorsprung (31) zusammenwirken, einen kreissehnenförmigen Abschnitt (24) aufweist.

4. System gemäß Anspruch 3, wobei ein Verhältnis zwischen dem kreissehnenförmigen Abschnitt (24) zu einem entlang der Schwenkrichtung (S) bemessenen Gesamtumfang des Kragenbereichs einen Wert zwischen 0,2 bis 0,8, bevorzugt 0,35 bis 0,65 und besonders bevorzugt 0,38 bis 0,52 annimmt.

5. System gemäß einem der vorhergehenden Ansprüche, wobei der hülsenelementseitige Kragenbereich in Längsrichtung des Schwenkbolzens abstehende Vorsprünge aufweist, die im montierten Zustand in Schwenkrichtung mit einem Teil des Schwenkbolzens formschlüssig zusammenwirken.

6. System gemäß einem der vorhergehenden Ansprüche, umfassend:
- ein Adapterelement (30), das derart gestaltet ist, dass das Adapterelement (30) im montierten Zustand den fahrzeugrahmenseitigen Vorsprung (31) bereitstellt.

7. System gemäß Anspruch 6, wobei das Adapterelement (30) im montierten Zustand eine fahrzeugrahmenseitige Aussparung des Nutzfahrzeugrahmens (10) bereitstellt, wobei die Aussparung einen Durchmesser (D2) aufweist, wobei ein Verhältnis einer Länge (D1) des Langlochs im Hülsenelement zum Durchmesser (D2) der Aussparung einen Wert zwischen 0,3 und 0,9, bevorzugt zwischen 0,5 und 0,9 und besonders bevorzugt zwischen 0,75 und 0,88 annimmt.

8. System gemäß Anspruch 6 oder 7, wobei das Adapterelement (30) als fahrzeugrahmenseitigen Vorsprung (31) ein Kreissegment aufweist, wobei vorzugsweise mehrere Kreissegmente vorgesehen sind, deren Kreissehnen parallel zueinander ausgerichtet und einander zugewandt sind.

9. System gemäß einem der vorhergehenden Ansprüche, wobei das Hülsenelement (20) verklemmbar mit dem Schwenkbolzen (1) ist, vorzugsweise mittels eines Gegenstückelements (40), wie z. B. einer Mutter, und/oder das Hülsenelement (20) eine zwischen Seitenwänden des Nutzfahrzeugrahmens (10) angeordnete Buchse verklemmt.

10. System gemäß einem der vorhergehenden Ansprüche, wobei das System einen Einsatz (60) mit einem einsatzseitigen Langloch (22) aufweist.

11. System gemäß einem der Ansprüche 6 bis 8, wobei das Adapterelement (30) und das Hülsenelement (20) derart gestaltet sind, dass sie in Schwenkrichtung gesehen bündig miteinander abschließen.

## Claims

1. A system for securing a pivoting bolt (1) to a utility vehicle frame (10), on which, in a mounted state, a utility vehicle link element is mounted pivotably, comprising a sleeve element (20) for receiving the pivoting bolt (1), wherein a collar region (21) is provided on the sleeve element (20), wherein the collar region (21) is configured in such a manner that, in a mounted state, the collar region (21) interacts in a form-fitting manner with a vehicle-frame-side engagement region, in particular a protrusion (31), in order to avoid twisting of the sleeve element (20), **characterized in that** the sleeve element (20) for receiving the pivoting bolt (1) has an elongated hole (22), in particular an elongated hole (22) with an oval shape.

2. The system as claimed in claim 1, wherein the sleeve element (20) has a cylindrical outer lateral surface (23) for the precisely fitting admission of the sleeve element (20) into a recess of the utility vehicle frame (10).

3. The system as claimed in one of the preceding claims, wherein the collar region (21) has a section (24) in the form of a chord of a circle for forming form-fitting surfaces which, in the mounted state, interact in the pivoting direction (S) in a form-fitting manner with the vehicle-frame-side protrusion (31).

4. The system as claimed in claim 3, wherein a ratio between the section (24) in the form of a chord of a circle to an overall extent of the collar region, as measured along the pivoting direction (S), assumes a value of between 0.2 to 0.8, preferably 0.35 to 0.65 and particularly preferably 0.38 to 0.52.

5. The system as claimed in one of the preceding claims, wherein the sleeve-element-side collar region has protrusions which protrude in the longitudinal direction of the pivoting bolt and, in the mounted state, interact in the pivoting direction in a form-fitting manner with part of the pivoting bolt.

6. The system as claimed in one of the preceding claims, comprising:
- an adapter element (30), which is configured in such a manner that, in the mounted state, the adapter element (30) provides the vehicle-frame-side protrusion (31).

7. The system as claimed in claim 6, wherein, in the mounted state, the adapter element (30) provides a vehicle-frame-side recess of the utility vehicle frame (10), wherein the recess has a diameter (D2), wherein a ratio of a length (D1) of the elongated hole in the sleeve element to the diameter (D2) of the recess assumes a value of between 0.3 and 0.9, preferably of between 0.5 and 0.9 and particularly preferably of between 0.75 and 0.88.

8. The system as claimed in claim 6 or 7, wherein the adapter element (30) has a circular segment as the vehicle-frame-side protrusion (31), wherein preferably a plurality of circular segments are provided, the chords of which are oriented parallel to one another and face one another.

9. The system as claimed in one of the preceding claims, wherein the sleeve element (20) can be clamped to the pivoting bolt (1), preferably by means of a counterpart element (40), such as, for example, a nut, and/or the sleeve element (20) clamps a bushing arranged between side walls of the utility vehicle frame (10).

10. The system as claimed in one of the preceding claims, wherein the system has an insert (60) with an insert-side elongated hole (22).

11. The system as claimed in one of claims 6 to 8, wherein the adapter element (30) and the sleeve element (20) are configured in such a manner that they end flush with each other, as seen in the pivoting direction.

## Revendications

1. Système de fixation d'un goujon de pivotement (1) sur un châssis (10) de véhicule utilitaire, sur lequel, à l'état monté, un élément formant bras oscillant d'un véhicule utilitaire, est monté de manière pivotante, comprenant
un élément de douille (20) pour recevoir le goujon de pivotement (1),
une zone de collerette (21) étant prévue sur l'élément de douille (20), la zone de collerette (21) étant conçue de telle sorte que la zone de collerette (21) coopère par coopération de forme avec une zone d'engagement côté châssis du véhicule, en particulier avec une saillie (31), afin d'éviter une rotation de l'élément de douille (20) à l'état monté,
**caractérisé en ce que**
l'élément de douille (20) destiné à recevoir le goujon de pivotement (1) présente un trou oblong (22), en particulier un trou oblong (22) de forme ovale.

2. Système selon la revendication 1,
dans lequel l'élément de douille (20) présente une surface enveloppe extérieure cylindrique (23) pour l'insertion exactement ajustée de l'élément de douille (20) dans une échancrure du châssis (10) du véhicule utilitaire.

3. Système selon l'une des revendications précédentes,
dans lequel la zone de collerette (21) présente une portion en forme de corde de cercle (24) pour former des surfaces de coopération de formes qui, à l'état monté, coopèrent par coopération de forme avec la saillie (31) côté châssis du véhicule dans la direction de pivotement (S).

4. Système selon la revendication 3,
dans lequel un rapport entre la portion de corde de cercle (24) et une circonférence totale de la zone de collerette, mesurée selon la direction de pivotement (S), prend une valeur comprise entre 0,2 et 0,8, de préférence entre 0,35 et 0,65 et de manière particulièrement préférée entre 0,38 et 0,52.

5. Système selon l'une des revendications précédentes,
dans lequel la zone de collerette côté élément de douille présente des saillies qui font saillie dans la direction longitudinale du goujon de pivotement et qui, à l'état monté, coopèrent par coopération de forme avec une partie du goujon de pivotement dans la direction de pivotement.

6. Système selon l'une des revendications précédentes, comprenant :
- un élément adaptateur (30) qui est conçu de telle manière que l'élément adaptateur (30) forme la saillie (31) côté châssis du véhicule, à l'état monté.

7. Système selon la revendication 6,
dans lequel l'élément adaptateur (30), à l'état monté, forme une échancrure côté châssis (10) du véhicule utilitaire, l'échancrure ayant un diamètre (D2), un rapport entre une longueur (D1) du trou oblong dans l'élément de douille et le diamètre (D2) de l'échancrure prenant une valeur comprise entre 0,3 et 0,9, de préférence entre 0,5 et 0,9 et de manière particulièrement préférée entre 0,75 et 0,88.

8. Système selon la revendication 6 ou 7,
dans lequel l'élément adaptateur (30) présente un segment circulaire à titre de saillie (31) côté châssis du véhicule, de préférence plusieurs segments circulaires étant prévus, dont les cordes sont orientées parallèlement les unes aux autres et tournées les unes vers les autres.

9. Système selon l'une des revendications précédentes,
dans lequel l'élément de douille (20) peut être serré avec le goujon de pivotement (1), de préférence au moyen d'un élément complémentaire (40), tel qu'un écrou, et/ou l'élément de douille (20) serre un manchon disposé entre les parois latérales du châssis (10) du véhicule utilitaire.

10. Système selon l'une des revendications précédentes,
dans lequel le système comprend un insert (60) ayant un trou oblong (22) du côté insert.

11. Système selon l'une des revendications 6 à 8,
dans lequel l'élément adaptateur (30) et l'élément de douille (20) sont conçus de telle sorte qu'ils se terminent en affleurement l'un avec l'autre, vus dans la direction de pivotement.
